# EUROPEAN PATENT APPLICATION

(11) **EP 0 924 921 A1**
(43) Date of publication of application: **23.06.1999**
(21) Application number: 97934704.4
(22) Date of filing: 06.08.1997
(51) Int. Cl.: H04M 11/08, H04B 7/26

(54) **INFORMATION COMMUNICATION CONTROLLER AND SYSTEM FOR THE SAME**

(30) Priority: 03.09.1996 JP 23269396
(71) Applicant: Toyota Jidosha Kabushiki Kaisha, Toyota-shi, Aichi-ken 471-71 (JP)
(72) Inventor: YAMADA, Satoshi, Toyota-shi, Aichi-ken 471-71 (JP)
(74) Representative: Rees, Alexander Ellison
(86) International application number: JP9702729
(87) International publication number: WO9810580

(57) **Abstract**

A mobile terminal (20) requests an information center (10) to furnish information by making a telephone call to the center (10). At the time of making the request, the terminal (20) transmits the available capacity of its own data memory (24) to the center. The center (10) compares the transmitted available capacity with the volume of the requested information and, when the capacity is smaller than the volume, reduces the volume of the data in accordance with the priority of the data and transmits the reduced data. Therefore, the occurrence of such a case can be prevented that the reception of the information is not completed due to the insufficient available capacity and received data become useless.

## Description

### BACKGROUND OF THE INVENTION

### 1. FIELD OF THE INVENTION

The present invention relates to data communications control for transmitting various types of data from an information center to mobile terminals, and more particularly to editing of the data to be transmitted.

### 2. DESCRIPTION OF THE RELATED ART

Information provider services providing various types of data through communication lines have become well known and widely available. Correspondingly, there is an increasing number of instances where moving vehicles, such as automobiles, carry communications equipment, and also an increasing number of instances where various types of information provider services are used through mobile communications.

For example, an apparatus disclosed in Japanese Patent Laid-Open Publication No. Hei 6-78075 transmits an information request signal from a vehicle to an information center and obtains corresponding information provided from the information center. This sort of system enables the necessary information to be obtained as desired from a moving vehicle. In particular, there are many instances during movement where little time is available for obtaining information or for confirming the contents of the obtained information. Accordingly, a system for selecting and obtaining only desired information is extremely advantageous.

It is highly essential for a terminal apparatus carried in a moving vehicle or for a portable terminal to have such features as compact size, low power consumption and low cost. Accordingly, such mobile or portable terminals often do not carry a large memory. Therefore, it may be impossible to receive all the data requested from the information center when the amount is large. Partial data is often completely useless, and communication sessions often end up being a waste.

### SUMMARY OF THE INVENTION

The present invention solves the aforementioned problem by providing a data communications control apparatus and system for receiving valid information at all times.

The present invention, a data communications control apparatus in a mobile terminal capable of receiving various types of data sent from an information center and storing the data to a memory having a predetermined capacity, is characterized in that it transmits the amount of available memory capacity to the information center.

Furthermore, the present invention is characterized in that it detects the available capacity in the memory carried in the above-mentioned mobile terminal, edits the data to be transmitted according to the available capacity, and transmits data having a size less than or equal to the above-mentioned available capacity.

Furthermore, the present invention is characterized in the above-mentioned mobile terminal in that it transmits the available capacity in the memory for storing data sent from the information center, and in the above-mentioned information center by editing the data to be transmitted according to the available capacity value that was received and then transmitting data in an amount that does not exceed the above-mentioned available capacity.

In this manner, the mobile terminal transmits data regarding the available capacity in its memory. Therefore, the data to be transmitted can be edited at the information center to a size that is no greater than the indicated available capacity. Therefore, the mobile terminal can consistently receive data in an amount less than or equal to the available capacity. This can prevent situations where a part of data becomes lost and communication sessions are wasted due to insufficient memory space during reception.

The present invention transmits the available capacity value of the memory to the information center in response to an inquiry from the information center regarding the available capacity in memory.

The present invention also transmits, together with the above-mentioned available capacity value, request information for specifying the contents of the desired data to be received from the information center.

The present invention organizes this available capacity value and request information into a single data frame.

In this manner, the information center sends an inquiry to the mobile terminal regarding the available capacity, and in response to this inquiry, the mobile terminal provides the available capacity value to the information center, thereby enabling the information center to easily obtain the available capacity value. Furthermore, by then sending the request information specifying the desired content of the service to be received together with the transmission of the available capacity value, it is possible to prevent the protocol from becoming complicated.

The present invention is further characterized in that the information center compares the size of data to be transmitted to the mobile terminal with the available capacity that was sent from the moving vehicle, and edits the data according to the comparison result so that the size of the data to be transmitted does not exceed the available capacity.

As a result, if there is sufficient available capacity, the requested data can be provided in its entirety to the mobile terminal, while, if the available capacity is insufficient, the data amount can be reduced.

The present invention is further characterized in that, when the available capacity is insufficient in the comparison result, the information center separates the content of data to be transmitted according to priority, and selects and transmits data having high priority.

By assigning priority, the information center automatically selects data having high necessity from among the data fitting the available capacity. Therefore, the mobile terminal can receive high priority data.

Furthermore, the present invention is characterized in that the information center separating the data to be transmitted into information list data and detailed content data, and assigning high priority to the information list data.

The list data enables the user to recognize the information regarding data. Therefore, the user can judge which information should be obtained. The memory can be organized as needed in order to be able to store information and the information can be received again.

The present invention is further characterized in that the information list data is a list of received electronic mail. By presenting the list of received electronic mail, the user of the mobile terminal can check to see what electronic mail has arrived. Based on this electronic mail list, the user can obtain urgent correspondence in a reliable and timely manner.

The present invention relates to a system comprising a data communications control apparatus for a moving vehicle, a data communications control apparatus for an information center, a moving vehicle, and an information center; a method for performing data communications control of these items; and a medium which stores a program for executing their operations on computer. The medium may be of any form, such as a CD-ROM, that can store programs. In addition, programs may be provided through communications. The program for the mobile terminal is preferably provided from the information center to the mobile terminal through communications.

### BRIEF DESCRIPTION OF THE DRAWINGS

Fig. 1 is a block diagram showing an overall system configuration.
Fig. 2 shows a communications protocol.
Fig. 3 shows the organization of a transmission data frame.
Fig. 4 is a flowchart of the editing process.
Fig. 5 shows a list of received mail.
Fig. 6 shows an overall system configuration.

### DETAILED DESCRIPTION OF THE PREFERRED EMBODIMENT

A preferred embodiment (hereinafter referred to as an "embodiment") of the present invention will be described below with reference to the drawings.

### Overall Configuration

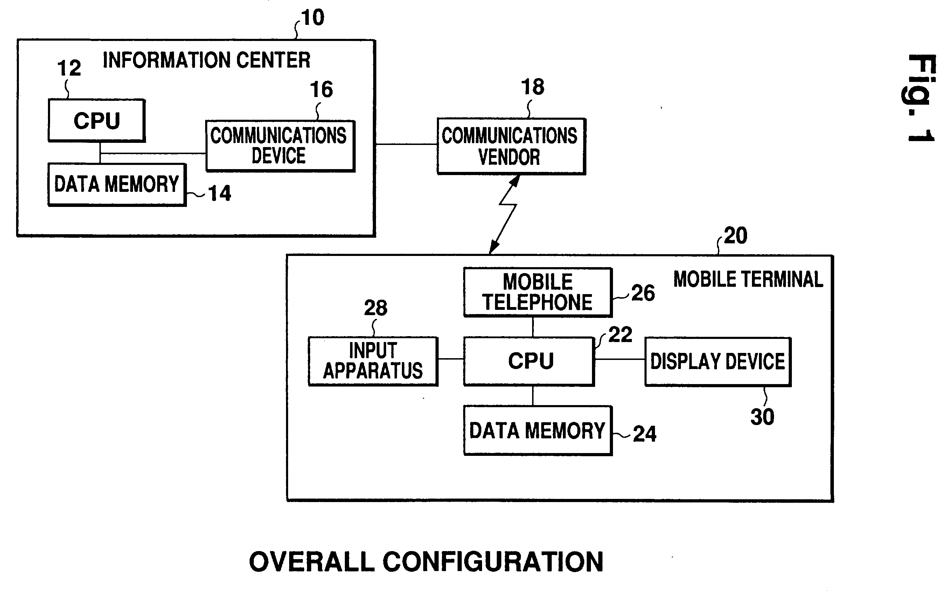

Fig. 1 is a block diagram showing an overall configuration of the communications system concerning the embodiment. An information center 10 internally comprises a CPU 12, a data memory 14, and a communications device 16. Data memory 14 stores various types of data which information center 10 collects and provides services for. The data may be collected online by information center 10 from other facilities or may be directly input through input means and created in information center 10.

CPU 12 writes data to or reads data from data memory 14, and further controls various operations in information center 10, such as the operation of communications device 16. Communications device 16 performs online communications with an external communications vendor 18. For example, communications are performed through digital communication lines.

Communications vendor 18 is connected to a telephone network and performs wireless communications with moving vehicles via many base stations.

A terminal apparatus 20 carried on the moving vehicle internally comprises a CPU 22, a data memory 24, a mobile telephone 26, an input device 28, and a display device 30. Mobile telephone 26 signifies a telephone for mobile use carried in a vehicle, and includes, besides the so-called car phone, any telephone such as a portable telephone or a portable telephone having the functions of a hands-free telephone that is placed in a cradle in vehicles. Data memory 24 stores various types of data, such as the data obtained from information center 10. CPU 22 controls the writing to and reading from data memory 24 of data as well as performs the operation of mobile telephone 26 in accordance with input of commands from input device 28, the control of the display of data on display device 30, and so forth. Input device 28 inputs various commands by user operation and may be formed from a touch panel provided on the front panel of display device 30. Mobile telephone 26 performs communications with information center 10 through the telephone network of communications vendor 18. In other words, mobile telephone 26, which is carried in the moving vehicle, and the base station of communications vendor 18 are connected by, radio, and the base station and information center 10 are connected through an ordinary telephone network. After the telephone line connects, communications between information center 10 and mobile terminal 20 are performed in accordance with a predetermined communications protocol. Information center 10 may perform direct communications with mobile terminal 20.

### Operation

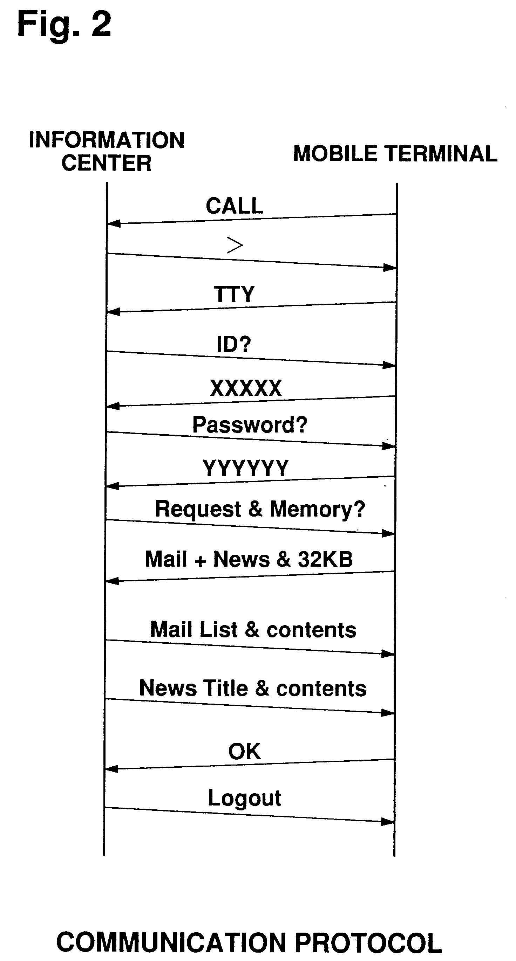

The operation in this sort of system is described with reference to Fig. 2. First, when a request is made to connect with information center 10 as a result of user-based operation of input device 28, mobile terminal 20 initiates a call using mobile telephone 26. In other words, a call is made to information center 10 in an attempt to connect the telephone lines. If a line connection is established, information center 10 returns ">", for example, to mobile terminal 20. The line connection may be confirmed through any method that has been decided on in advance. Mobile terminal 20 transmits a communications protocol classification. For example, information is transmitted regarding the classification for TTY (teletype) procedure. Information center 10 recognizes the communications protocol, and first requests the transmission of an ID to initiate the information service. This ID is registered in advance in order to receive service. As requested, mobile terminal 20 transmits the predetermined ID, which is "XXXXX" in this example. Once the ID is received, information center 10 next requests the transmission of a password. The password is registered in advance for each ID. Mobile terminal 20 transmits the registered password, which is "YYYYY" in this example.

Information center 10 confirms the user's identity from a match between the ID and password stored in advance, and begins service when confirmation is established.

In this embodiment, information center 10 first requests the transmission of a request command and the amount of available memory capacity. Mobile terminal 20 responds to this with the request command and the amount of available memory capacity. In other words, a request is made for transmission of the amount of available capacity in data memory 24 of mobile terminal 20 simultaneously with the request for transmission of the request command which specifies data among the services provided by information center 10.

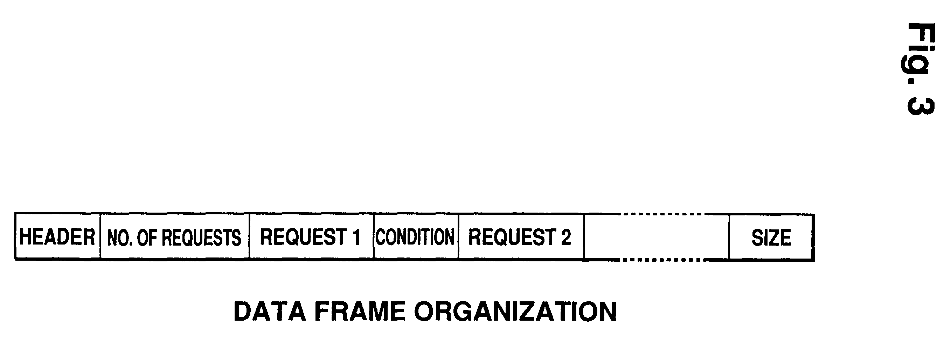

A data frame containing request commands and the amount of available capacity is, for example, organized as shown in Fig. 3. A header indicating the classification of transmission data is arranged at the beginning of the data frame. In this case, data which indicates data for requesting information is stored here. The number of requests is arranged next. In other words, the number of requests is two for mail and news. News is usually requested separately for each field. A code indicating the content of the request (such as mail) followed by its condition (such as not yet read) are arranged next. The field of news may be specified in the condition data. The end of the data frame includes the amount of available capacity.

In response to this request, mobile terminal 20 transmits a request command specifying the classification of requested information and the amount of available memory capacity. In this example, a request is made for the transmission of incoming electronic mail (Mail) and the providing of the latest news (News). For the amount of available memory capacity, 32 KB (kilobytes) is transmitted as the usable space in data memory 24 for storing received data. This available capacity is determined by CPU 22 which examines the contents of data memory 24. For example, in addition to the area that is totally free, an area storing information which has already been output or an area storing information more than 5 hours old may also be considered to be free areas. Furthermore, it is preferable to display the data regarding the information stored in data memory 24 on display device 30 to confirm whether overwriting is allowed by the user.

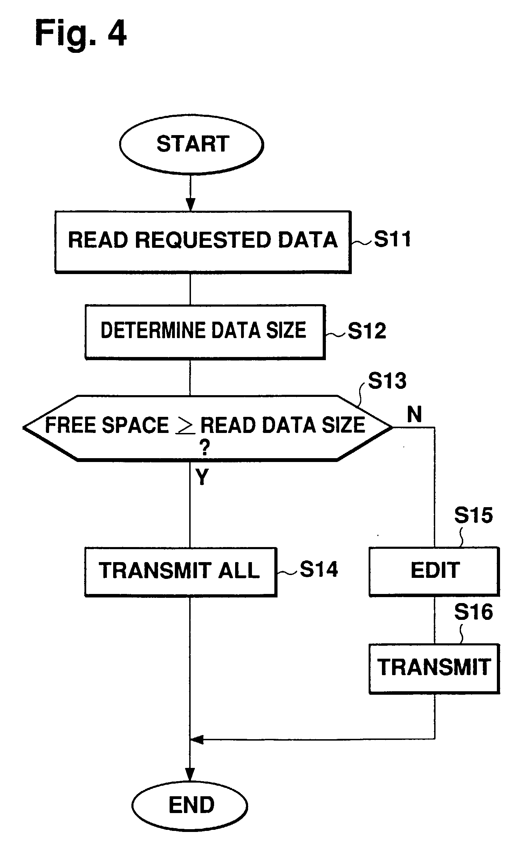

Information center 10, which received the request command and the data regarding available capacity from mobile terminal 20, edits and creates data to be transmitted based on the received data. This process is described with reference to Fig. 4.

First, data corresponding to Mail and News that were requested by the request command is read (S11) from data memory 14. Then, the size of the read data to be transmitted is determined (S12) and compared (S13) with the available capacity data that was sent from mobile terminal 20. If the size of the data to be transmitted is not greater than the available capacity, the data that was read is transmitted in its entirety (S14) since transmitting it in full poses no problem.

On the other hand, if in S13 the available capacity is insufficient for storing the data to be transmitted, the data is edited (S15) to a size that does not exceed the available capacity, and the edited data is transmitted (S16).

In the editing of S15, the read data to be transmitted is first separated into a list portion and a content portion. For example, if the data is mail, it is separated into the list portion containing bibliographic items such as sender, data size, and received time, and into the content portion containing the actual mail contents. If the data is news, it is separated into news titles and contents. The data may be separated in advance and stored in data memory 14 of information center 10.

The data to be transmitted is then edited to fit the available capacity. During editing, list data is assigned high priority and mail is assigned higher priority than news. Therefore, priority is assigned in order of (i) list of mail, (ii) title of news, (iii) contents of mail, and (iv) contents of news, and the data is edited to a size less than or equal to the available capacity, then transmitted to mobile terminal 20.

Mobile terminal 20 receives the data, and transmits OK when reception is complete. Information center 10 responds to the reception of the OK command by transmitting LOGOUT to indicate the end of communication and disconnecting the line. This terminates the transmission service of data. Information center 10 charges a fee for these services to the ID account.

Mobile terminal 20 stores the received data in data memory 24. As the size of the received data is less than or equal to the available capacity of data memory 24, the received data can readily be stored in its entirety and thus, situations can be prevented where the received data cannot be stored in its entirety and cannot be fully utilized due to insufficient available capacity in data memory 24.

In this embodiment in particular, data is assigned priority and it is possible to receive only the list information. Therefore, if the user desires further information based on the received list information, the user can obtain the required information by reorganizing the data within the user's data memory 24 and again accessing information center 10.

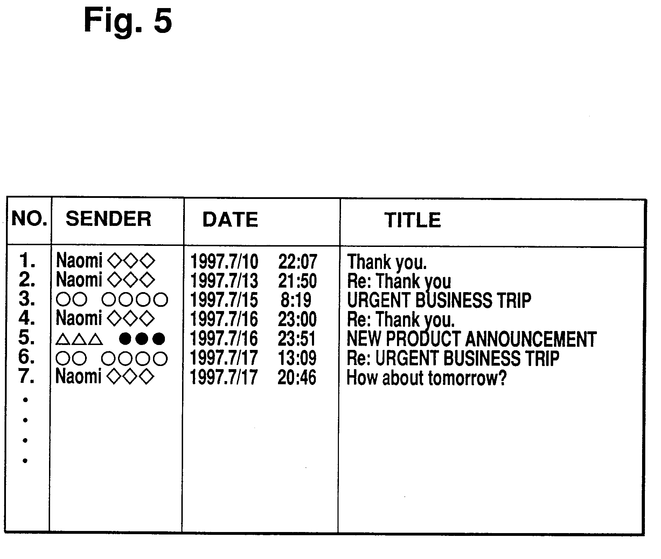

In particular, by presenting a list of received electronic mail to the user, the user of the mobile terminal can know what sort of electronic mail has arrived. An example of the list of received electronic mail is shown in Fig. 5. The list includes columns for number (No.), sender, date, and title. Therefore, by looking at this list, the user may be able to recognize the necessity of a particular mail, for example, if mail is marked urgent. By looking at the received mail list, the user can know the importance or urgency of each piece of mail. Thus, using the list, desired mail can be obtained. Furthermore, based on this electronic mail list, urgent correspondence and the like can be obtained in a reliable and timely manner. Additionally, data (such as a flag) indicating the importance or urgency can also be appended to the list. Accordingly, the importance or urgency can be displayed in the list with a small amount of data.

If there are a plurality of information requests from the mobile terminal including requests for electronic mail, it is preferable to create data with priority given to electronic mail.

Although the above-mentioned embodiment describes this invention as applied to a mobile terminal apparatus, the invention is also applicable to a portable terminal apparatus.

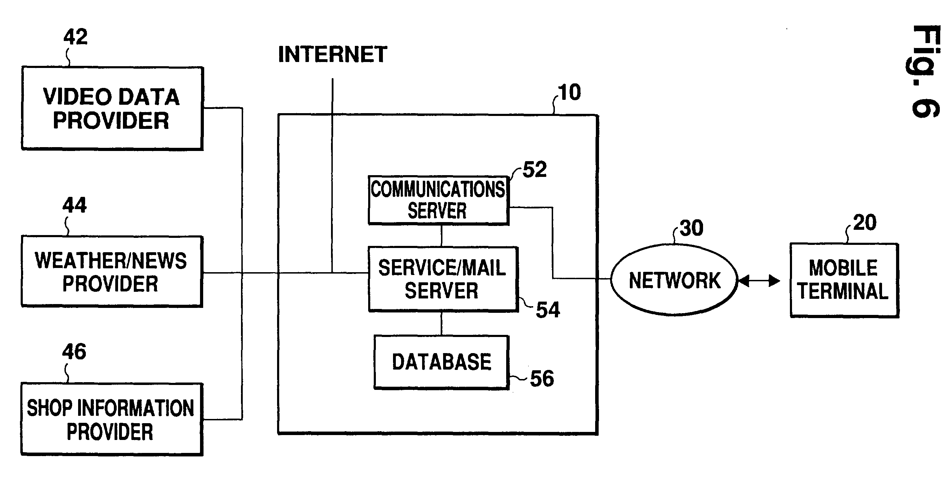

Next, Fig. 6 shows an overall configuration of the system of the present invention. The system shown in Fig. 6 is basically the same as the system shown in Fig. 1. A communications server 52, a service/mail server 54, and a database 56 are provided in information center 10. Communications server 52 conducts communications by connecting to mobile terminal 20 via network 30. Service/mail server 54 is connected, such as through public telephone lines or dedicated lines, to video data provider 42, weather/news provider 44, and shop information provider 46. The various types of data obtained from video data provider 42, weather/news provider 44, and shop information provider 46 are stored in database 56. Furthermore, service/mail provider 54 is also connected to the Internet through telephone lines and can obtain various types of data via the Internet. Information center 10 supplies data that has been stored in advance in database 56 to the mobile terminal. However, various types of information can be obtained and provided according to request from mobile terminal 20. Furthermore, mobile terminal 20 may be connected to the Internet.

In addition, the medium which stores the information communication control programs may be of any form, such as a CD-ROM, that can store programs. The programs may be provided through communications. The program for mobile terminal is preferably provided from the information center to the mobile terminal through communications.

### Industrial Applicability

The present invention is applicable to terminal apparatus carried in a vehicle and the like for providing various types of information to a driver and the like, to apparatus in a center for providing information to the terminal apparatus, and systems including both apparatus.

While there has been described what is at present considered to be a preferred embodiment of the invention, it will be understood that various modifications may be made thereto, and it is intended that the appended claims cover all such modifications as fall within the true spirit and scope of the invention. Programs can be provided by CD-ROM or through communications, and the programs are executed at computers in mobile terminals and information centers.

## Claims

1. A mobile terminal data communications control apparatus capable of receiving various types of data sent from an information center and storing the data to a memory in the mobile terminal, wherein the data communications control apparatus transmits the available capacity of the memory to the information center.

2. The apparatus according to claim 1 wherein the data communications control apparatus transmits the available capacity value in the memory to said information center as a response to an inquiry regarding the available capacity in memory is received from the information center.

3. The apparatus according to claim 2 wherein the data communications control apparatus simultaneously transmits, when transmitting said available capacity value, an information request that specifies the data contents desired from the information center.

4. The apparatus according to claim 3 wherein the data communications control apparatus transmits the available capacity value and the information request in a single data frame.

5. An information center data communications control apparatus for transmitting various types of data to a mobile terminal, wherein the data communications control apparatus determines the amount of available capacity in a memory carried in the mobile terminal, edits the data to be transmitted in accordance with the determined amount of available capacity, and transmits an amount of data that does not exceed said available capacity.

6. The apparatus according to claim 5 wherein the data communications control apparatus requests the mobile terminal to transmit the available capacity value of said memory and obtains the available capacity value as a response to the request.

7. The apparatus according to claim 6 wherein the data communications control apparatus obtains from the mobile terminal, together with said available capacity value, an information request that specifies the data contents desired from the information center.

8. A data communications control system for transmitting various types of data from an information center to a mobile terminal, wherein:
the available capacity in a memory for storing data sent from the information center is transmitted by the mobile terminal,
the data intended for transmission is edited by the information center, and
an amount of data that does not exceed the available capacity is transmitted by the information center.

9. The system according to claim 8 wherein the data communications control system requests the mobile terminal to transmit the available capacity value of said memory and obtains the available capacity value as a response to the request.

10. The system according to claim 9 wherein the data communications control system obtains from the mobile terminal, together with said available capacity value, an information request that specifies the data contents desired from the information center.

11. The apparatus or system according to any one of claims 5-10 wherein the information center compares the size of the data intended for transmission to the mobile terminal with the available capacity sent from the mobile terminal and, based on this comparison, edits the data to be transmitted so that the size thereof does not exceed the available memory capacity.

12. The apparatus or system according to claim 11 wherein the data communications control apparatus or system organizes the contents of the data intended for transmission by the information center according to priority and selects and transmits data having a higher priority when the comparison result indicates data editing should be performed.

13. The apparatus or system according to claim 12 wherein the information center separates the data intended for transmission into information list data and detailed content data, and assigns a higher transmission priority to the information list data.

14. The apparatus or system according to claim 13 wherein said information list data is a list of received electronic mail.

15. A data communications control method for transmitting various types of data from an information center to a mobile terminal wherein:
the mobile terminal transmits the available capacity in a memory for storing data sent from information center; and
the information center edits data to be transmitted in accordance with the available capacity and transmits an amount of data that does not exceed the available capacity.

16. The method according to claim 15 wherein the data communications control method requests the mobile terminal to transmit the available capacity value of said memory and obtains the available capacity value as a response thereof.

17. The method according to claim 16 wherein the data communications control method obtains from the mobile terminal, together with said available capacity value, an information request that specifies the data contents desired from the information center.

18. The method according to any one of claims 15-17 wherein the information center compares the size of the data intended for transmission to the mobile terminal with the available capacity value sent from the mobile terminal and, based on this comparison, edits the data to be transmitted so that the size thereof does not exceed the available memory capacity.

19. The method according to claim 18 wherein the information center
organizes the contents of the data intended for transmission by the information center according to priority, and
selects and transmits data having a higher priority,
when the comparison result indicates data editing should be performed.

20. The method according to claim 19 wherein the information center separates the data intended for transmission into information list data and detailed content data, and assigns a higher transmission priority to the information list data.

21. The method according to claim 20 wherein said information list data is a list of received electronic mail.

22. A medium on which is stored a data communications control program in a mobile terminal for receiving various types of data sent from an information center and storing the data to a memory having a predetermined capacity, wherein the data communications control program transmits the available capacity in the memory to the information center.

23. The medium according to claim 22 wherein the stored data communications control program transmits the available capacity value of the memory to said information center when a response to an inquiry regarding the available capacity in said memory is received from the information center.

24. The medium according to claim 23 wherein the stored data communications control program simultaneously transmits, when transmitting said available capacity value, an information request that specifies the data contents desired from the information center.

25. The medium according to claim 24 wherein the stored data communications control program transmits the available capacity value and the information request in a single data frame.

26. A medium on which is stored a data communications control program in an information center for transmitting various types of data to a mobile terminal, wherein the data communications control program detects the amount of available capacity in a memory carried in the mobile terminal, edits the data to be transmitted in accordance with the amount of available capacity, and transmits an amount of data that does not exceed the available capacity.

27. The medium according to claim 26 wherein said data communications control program requests the mobile terminal to transmit the available capacity value of said memory and obtains the available capacity value as a response to the request.

28. The medium according to claim 27 wherein the data communications control program obtains from the mobile terminal, together with said available capacity value, an information request that specifies the data contents desired from the information center.

29. The medium according to claim 27 wherein said data communications control program compares the size of the data intended for transmission to the mobile terminal with the available capacity value sent from the mobile terminal and, based on this comparison, edits the data to be transmitted so that the size thereof does not exceed the available memory capacity.

30. The medium according to claim 29 wherein the information center organizes the contents of the data intended for transmission by the information center according to priority and selects and transmits data having high priority when the comparison result indicates data editing should be performed.

31. The medium according to claim 30 wherein the information center separates the data intended for transmission into information list data and detailed content data, and assigns a higher transmission priority to the information list data.

32. The medium according to claim 31 wherein said information list data is a list of received electronic mail.
